# EUROPEAN PATENT SPECIFICATION

(11) **EP 4 124 782 B1**
(45) Date of publication and mention of the grant of the patent: **21.02.2024**
(21) Application number: 21188166.9
(22) Date of filing: 28.07.2021
(51) Int. Cl.: F16H 61/00, F16H 61/30

(54) **AN ASSEMBLY FOR ACTUATING A VEHICLE TRANSMISSION**
ANORDNUNG ZUR BETÄTIGUNG EINES FAHRZEUGGETRIEBES
ENSEMBLE D'ACTIONNEMENT D'UNE TRANSMISSION DE VÉHICULE

(43) Date of publication of application: 01.02.2023
(73) Proprietor: ZF CV Systems Europe BV, 1170 Brussels (BE)
(72) Inventor: KLUZ, Jakub, 51 -163 Wroclaw (PL); KOZLOWSKI, Andrzej S., 52-016 Wroclaw (PL)
(74) Representative: Ohlendorf, Henrike

(56) References cited:
- EP-A1- 3 623 620
- DE-A1-102010 005 892
- DE-T5-112017 000 236

## Description

### TECHNICAL FIELD OF THE PRESENT INVENTION

The present invention generally relates to the field of a transmission or a gearbox actuator used e.g., in a commercial vehicle. More particularly, the present invention relates to an assembly for actuating a vehicle transmission or a gearbox, which is operated either pneumatically or hydraulically in order to change the gear combinations resulting in an altered transmission output speed.

### BACKGROUND OF THE PRESENT INVENTION

It is known in the art to utilize an electronically controlled hydraulic or pneumatic transmission actuator to control the operations related to changing of gears and thereby changing the output speed of the vehicle transmission. One such conventional electronically controlled pneumatic transmission actuator is disclosed e.g., in the patent publication EP1880126A1 in which said transmission actuator is located on a top side of a transmission box of a commercial vehicle. EP1880126A1 also shows a module for solenoid valves with reference sign "9" in the only figure provided in the publication.

Such transmission actuators and their conventional modules for solenoid valves within the transmission actuator are relatively heavy considering they are made of materials such as aluminum and/or its alloys. However, such heavy construction of the modules for the solenoid valves affects the overall weight of the transmission actuators and as a consequence, the overall weight of the transmission or gearbox. Furthermore, the number of manufacturing steps involved in finishing such heavy and metal-based modules of the solenoid valves are relatively high. Such potential shortcomings increase the cost of overall transmission actuators.

DE102010005892A1 relates to a transmission valve mounting block and a method for producing such a transmission valve mounting block.

DE112017000236T5 relates to a hydraulic control apparatus for a vehicle transmission device mounted on a vehicle.

It is one of the objectives of the present invention to address the existing needs of providing a construction wise lighter module for the solenoid valves within the transmission actuator of e.g., the commercial vehicles. Such a module at the same time should also meet the design and manufacturing requirements of a high-volume component supplier such as the applicant for the Original Equipment Manufacturers (OEMs).

### SUMMARY OF THE PRESENT INVENTION

In accordance with an embodiment of the present invention, an assembly for actuating a vehicle transmission or a gearbox is disclosed. The assembly includes a plurality of solenoid valves, and a polymeric-material-based valve block for receiving the plurality of solenoid valves. Using the polymeric-material-based valve block in said assembly has an effect on e.g., the overall weight of the valve block and as a result, the weight of the transmission actuators of the vehicle transmission or the gearbox. Moreover, the polymeric-material-based valve block improves the manufacturability and brings e.g., material costs down for the transmission actuators of the gearbox.

For mere explanation, it is noted that the plurality of solenoid valves are electronically actuated valves which open/close fluid (hydraulic or pneumatic) pathways present within said polymeric-material-based valve block. By opening and/or closing the fluid pathways selectively, with the help of the plurality of solenoid valves, the assembly actuates one or more cylinders or linear actuators (not shown). Each of said one or more cylinders or linear actuators include generally, a piston that linearly translates within the respective cylinder and a rod connected to the piston, and both of which are located within the one or more cylinders. At one of the ends of the rod, typical gear-change-enablers such at least one shift fork is provided (see, e.g., the patent publication WO2020239207A1). Said shift fork actuates dog-clutches or synchronizers present within the vehicle gearbox to change the gears. Thus, in accordance with the embodiment, despite the vibrations generated at the polymeric-material-based valve block due to the operation of the solenoid valves and/or due to the abrupt changes in the flow of the fluid within the polymeric-material-based valve block, the polymeric-material-based valve block is configured to hold shape and provide same or similar service life as that of a metal-based valve block typically used in the transmission or gearbox actuators.

Furthermore, in accordance with above embodiment or another embodiment, the polymeric-material-based valve block includes at least one row of equidistantly positioned receiving slots, wherein the equidistantly positioned receiving slots are for receiving the plurality of solenoid valves. For instance, the polymeric-material-based valve block with its equidistantly positioned receiving slots may enable equal distribution of load and/or stress associated with holding the plurality of solenoid valves.

In accordance with one or more embodiments discussed above, the polymeric-material-based valve block includes two rows of the equidistantly positioned receiving slots positioned either symmetrically or asymmetrically on either side of a longitudinal center axis or either of sides of the polymeric-material-based valve block. For instance, the longitudinal center axis mentioned herewith could also be replaced with a geometric plane that passes right through a geometric center of the polymeric-material-based valve block.

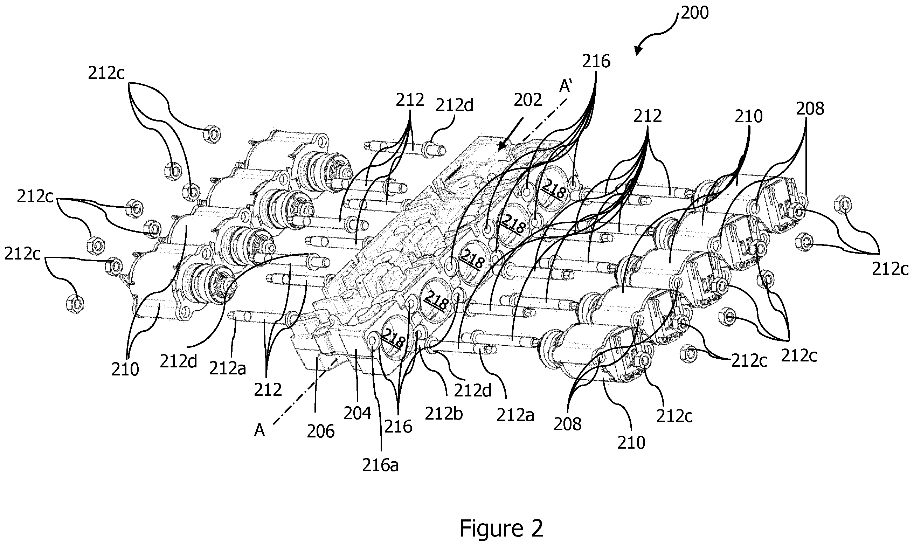

In one embodiment that is related to asymmetric arrangement of the solenoid valves in the polymeric-material-based valve block, a first side of the valve block may have five slots for receiving five solenoid valves whereas the second side of the valve block may have four slots. In another embodiment of the present invention (related to symmetric arrangement of the solenoid valves), a skilled person would derive the presence of equal number of the solenoid valves on either of the sides of the valve block. This embodiment can be more easily understood with the help of the description provided in the following sections in association with Figure 2 of the present invention. Regardless of the arrangement or the presence of number of the solenoid valves or their distribution on either sides of the valve block, implementing the valve block using the polymeric material enables easy customization or change of design depending on the need. Such change of design is easier implemented when the valve block is a polymeric-material-based valve block vis-à-vis a metal-based conventional valve blocks.

In accordance with one or more of the above embodiments, the polymeric-material-based valve block is manufactured by injection molding process. The injection molding process is not only cost-effective considering the material choice for the valve block, but also provides for easy tooling and manufacturing in higher volumes.

Furthermore, in an exemplary embodiment of the present invention, the assembly further comprises a plurality of bolts and at least two of the plurality of bolts are used to attach each of the plurality of solenoid valves to the polymeric-material-based valve block. It may be understood that the at least two bolts for attaching the each of the plurality of solenoid valves is directed for the purposes of better assembly and additional grip in holding e.g., the solenoid valves relative to the polymeric-material-based valve block. Furthermore, the environment surrounding the assembly of the present invention present is in and around the vehicle transmission where vibrations are high due to the relatively close proximity to e.g., the internal combustion engine. Thus, the provision of more than one bolt to attach every solenoid valve to the valve block is considered advantageous for it enables distribution of holding forces approximately equally on either of the sides of the solenoid valves.

In the same or a different embodiment of the present invention, the each of plurality of bolts are threaded on either of the first and second ends of the each of plurality of bolts. As mentioned above, the valve block of the present invention is made of polymeric-material-based. The choice of the polymeric material renders the usage of thread at only one of ends not optimally designed, for instance, due to the reason that the polymeric material was found to provide limited support when only end of the plurality of bolts is provided with the thread. Thus, the each of plurality of bolts is provided with threaded connection on either of its first and second ends.

Yet, in the same embodiment as the previous paragraph, the first end of the each of plurality of bolts is provided with a standard metric thread and the second end of the each of plurality of bolts is provided with a self-forming or self-tapping thread such that when the second end is inserted into the polymeric-material-based valve block, a confirming receiving slot is formed in the polymeric-material-based valve block.

It is one of the most preferred embodiments of the present invention to provide the self-forming or self-tapping thread at the second end of the each of the plurality of bolts and providing the standard metric thread at the first end of the each of the plurality of bolts. In particular, insertion of metric thread in the polymeric-material-based valve block may not withstand the required load exerted due to e.g., the weight of the solenoid valves and still furthermore, any rework on the metric thread provided in the polymeric-material-based valve block may result in damage of the thread(s) in the polymeric-material-based valve block. Moreover, this type of damage of the threads may potentially lead to scrap the polymeric-material-based valve block. Thus, the second end is advantageously or preferably is provided with the self-forming or self-tapping thread, which, for instance, be instantaneously formed while assembling the solenoid valves to the polymeric-material-based valve block.

It may also be understood that a self-forming or self-tapping thread which naturally forms thread on material in which it is inserted, wherein the material in which the self-forming or self-tapping thread is softer than the screw or bolt which carries the self-tapping or self-forming thread.

In a preferred embodiment of the present invention, the first end of the each of plurality of bolts is assembled with a metric nut to "firmly fix" the position of the corresponding solenoid valve in relation to the valve block. Providing the standard metric thread at the second end of the each of the plurality of bolts enables further support (in addition to the self-tapping thread at the first end of the bolts) for the polymeric-material-based valve block to hold the solenoid valves.

It follows from the previous paragraph, as a consequence of having the polymeric-material-based valve block or as a further advantage, the polymeric-material-based valve block does not have any pre-formed thread(s) but only bore(s) dedicated for receiving the plurality of bolts, preferably before the bolts are assembled to the valve block because of e.g., the presence of self-tapping thread at the second end of the each of plurality of bolts. For instance, a plurality of bore(s) corresponding to the number of the plurality of the bolts can be provided at the polymeric-material-based valve block. These bores form threads on inserting the bolts with self-tapping thread(s) at their second end(s). For a volume manufacturer like the applicant, this may result in a reduction of one manufacturing step. On a higher scale or volume of manufacturing, reduction of the manufacturing steps may be critical in certain conditions to retain cost competitiveness.

In accordance with one or more embodiments discussed above, the second end of the each of the plurality of bolts is additionally provided with a flange for limiting the length up to which the each of the plurality of bolts can be inserted into the polymeric-material-based valve block. In this advantageous implementation, the flange also optionally functions as an axial support to orient the plurality of bolts linearly with respect to the polymeric-material-based valve block apart from demarcating the limit to which the second end of the each of plurality of bolts is provided with the self-tapping or self-forming thread.

In accordance with an embodiment of the present invention, the polymeric-material-based valve block includes glass-fibre reinforced thermoplastic material or includes polyphthalamide. In accordance with the present invention, the polymeric-material-based valve block includes 50% glass-fibre reinforced engineering thermoplastic material based on a semi-crystalline, partially aromatic copolyamide. The choice of the material of glass-fibre reinforced thermoplastic material is particularly suitable for the injection molding process through which the polymeric-material-based valve block according to the present invention can be manufactured.

More importantly, the glass-fibre reinforced thermoplastic material, compared to e.g., other polyphthalamides, illustrates the required performance for use in the assembly for actuating the vehicle transmission or the gearbox (according to the present invention) at high temperatures providing parts which are stiffer, stronger and have better heat distortion stability and chemical resistance. Since, the vehicle transmission or the gearbox is in the vicinity of the internal combustion engine, the choice of material is particularly suited for the applications envisaged in the present invention.

Furthermore, one of the salient advantages of using the glass-fibre reinforced thermoplastic material as part of the polymeric-material-based valve block according to the present invention lies in its ability to be used directly in injection molding process without any pre-drying, as long as packing in which the glass-fibre reinforced thermoplastic material is delivered is not damaged before the start of the process of injective molding.

For instance, the melting point of the glass-fibre reinforced thermoplastic material, which is part of the valve block, could be higher than 300 degrees Celsius. For another instance, the density of the material which is part of the valve block is higher than 1 g/cm³ or preferably, approximately 1.65 g/cm³.

Still furthermore, depending the type of the actuator for the transmission or the gear box used, in accordance with one or more embodiments discussed above, the each of the plurality of solenoid valves are configured to open and/or close at least one fluid path within the polymeric-material-based valve block, wherein the at least one fluid path is configured to operate with hydraulic (non-compressible) or pneumatic (compressible) fluid. For instance, pneumatic transmission actuator could be used in commercial vehicles whereas the hydraulic transmission actuator could be used in cars.

In accordance with an embodiment, a method of manufacturing the assembly according to any one of above-discussed embodiments is disclosed, wherein the method includes heating polymeric-material used to make the polymeric-material-based valve block at a temperature range between 60 to 350 degrees Celsius in an injection molding machine.

In accordance with another embodiment, a gearbox or transmission actuator comprising the assembly according to any one of the above-discussed embodiments is disclosed.

In accordance with yet another embodiment of the present invention, the use of the assembly according to any one of the above-discussed embodiments in association with a vehicle transmission or gearbox of a commercial vehicle is disclosed.

### BRIEF DESCRIPTION OF THE ACCOMPANYING DRAWINGS

Figure 1 illustrates a conventional assembly for actuating a vehicle transmission or a gearbox; and
Figure 2 illustrates an assembly for actuating a vehicle transmission or a gearbox according to the present invention.

### DETAILED DESCRIPTION OF THE ACCOMPANYING DRAWINGS

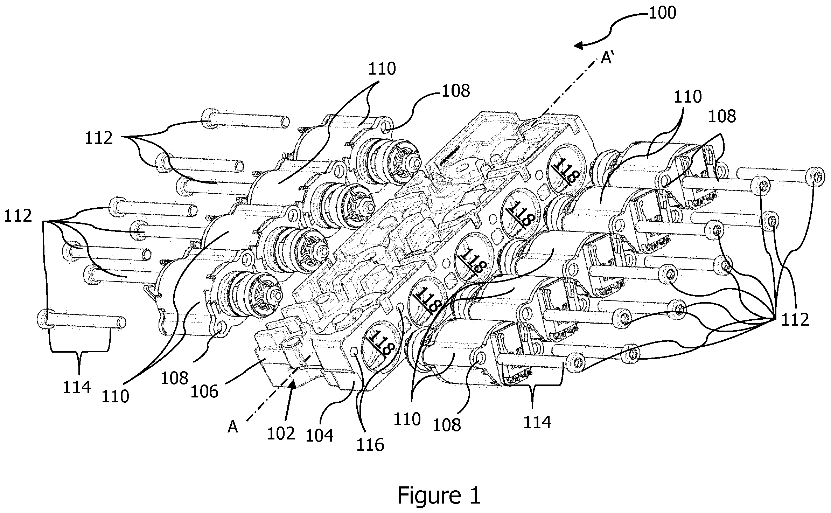

Figure 1 illustrates a conventional assembly 100 for actuating a vehicle transmission or a gearbox (not shown in Figure 1).

Conventional assembly 100 includes a valve block 102. Valve block 102 as shown in Figure 1 is symmetrically arranged on either side of axis A-A'. Valve block 102 of conventional assembly 100 includes about nine receiving slots 118 for receiving nine solenoid valves 110. This is however only provided for an exemplary illustration. The number of solenoid valves 110 can naturally vary depending on the type of the vehicle transmission or the gearbox for which conventional assembly 100 is employed. In the convention valve block 102 shown in Figure 1, during assembly, once solenoid valves 110 are received within slots 118 of valve block 102, said solenoid valves 110 are fixed to valve block 102 using metal screws 112. Each of screws 112 may include a full thread in region 114 of screws 112.

Furthermore, screws 112 are inserted through holes 118 present at frames of solenoid valves 110 and are positioned to coincide with holes 116 present at valve block 102.

It is noted that valve block 102 shown in Figure 1 is made of a castable metal such as Aluminum. There are a variety of reasons to indicate why Aluminum can be chosen as the material for manufacturing valve block 102. Such reasons are out of scope of the present invention. However, it is noted that use of Aluminum as the material for manufacturing valve block 102 results in corresponding design and tooling constraints. Furthermore, the use of Aluminum influences overall weight of valve block 102 and its cost due to said design and tooling constraints.

It follows from the above, holes 116 present at valve block 102 should have corresponding threading to receive metal screws 112. Naturally, this results in an additional manufacturing step while finishing valve block 102 so that solenoid valves 110 can be assembled with valve block 102 using screws 112.

It is one of the objectives of the present invention to provide an economic solution that not only takes the design and tooling constraints of valve block 102 into account, but also provides a solution that enhances the serviceability of valve black 102 in association with solenoid valves 110.

Figure 2 illustrates an assembly 200 for actuating a vehicle transmission or a gearbox according to the present invention.

In accordance with the present embodiment, assembly 200 includes a plurality of solenoid valves 210, and a polymeric-material-based valve block 202 for receiving plurality of solenoid valves 210. Using polymeric-material-based valve block 202 in assembly 200 has an effect on e.g., the overall weight of valve block 202 and as a result, the weight of the transmission actuators of the vehicle transmission or the gearbox (not shown in Figure 2). Moreover, polymeric-material-based valve block 202 improves the manufacturability and brings e.g., material costs down for the transmission actuators of the gearbox.

Furthermore, as shown in Figure 2, polymeric-material-based valve block 202 includes at least one row of equidistantly positioned receiving slots 218, wherein the equidistantly positioned receiving slots 218 are for receiving the plurality of solenoid valves 210. For instance, polymeric-material-based valve block 202 with its equidistantly positioned receiving slots 218 enables equal distribution of load and/or stress associated with holding plurality of solenoid valves 210. During the usage of e.g., polymeric-material-based valve block 202, the stress caused because of the vibration of the vehicle transmission or the gearbox should also be equally distributed and in this regard, the equidistant positioning of slots 218 for receiving solenoid valves 210 is advantageous. Furthermore, spatial distribution of solenoid valves 210 is optimally designed to improve the overall packaging of solenoid valves 210 within a housing (not shown in Figure 2) of the transmission actuators of the vehicle transmission or the gearbox.

In accordance with the same or different embodiment, polymeric-material-based valve block 202 includes two rows of equidistantly positioned receiving slots 218 positioned either symmetrically or asymmetrically on either side of a longitudinal center axis (A -A') or either of sides 204, 206 of polymeric-material-based valve block 202.

For instance, longitudinal center axis A-A' could also be replaced with a geometric plane that passes right through a geometric center (not labeled in Figure 2) of valve block 202. In one embodiment (related to asymmetric arrangement of solenoid valves 210), as shown in Figure 2, a first side 204 (visible side) of valve block 202 may have five slots 218 for receiving five solenoid valves 210 whereas second side 206 of valve block 202 may have four slots 218 (not shown in Figure 2, but can be inferred due to the presence of four solenoid valves 210 in the proximity of second side 206 of valve block 202 in Figure 2). In another embodiment of the present invention (related to symmetric arrangement of solenoid valves 210), a skilled person would derive the presence of equal number of solenoid valves 210 on either of sides 204 and 206 of valve block 202.

In accordance with the same or different embodiment, polymeric-material-based valve block 202 is manufactured by injection molding process. The injection molding process is not only cost-effective considering the material choice for valve block 202, but also provides for easy tooling and manufacturing in higher volumes.

Furthermore, in accordance with the present embodiment, assembly 200 further comprises a plurality of bolts 212 and at least two of the plurality of bolts are used to attach each of plurality of solenoid valves 210 to polymeric-material-based valve block 202. It may be understood that at least two bolts 212 for attaching the each of the plurality of solenoid valves 210 for the purposes of better assembly and additional grip. The environment surrounding assembly 200 is present in and around vehicle transmission where vibrations are high due to the close proximity to e.g., the internal combustion engine. Thus, providing more than one bolt 212 to attach every solenoid valve 210 to valve block 202 is advantageous.

In the same embodiment, each of plurality of bolts 212 are threaded on either of first and second ends 212a, 212b of each of plurality of bolts 212. As mentioned above, valve block 202 of the present invention is made of polymeric-material-based. The choice of the polymeric material renders the usage of thread at only one of ends 212a and 212b not advantageous, for instance, due to the reason that the polymeric material was found to provide limited support when only end of plurality of bolts 212 is provided with the thread. Thus, the each of plurality of bolts 212 is provided with threaded connection on either of its first and second ends 212a, 212b.

Yet, in the same embodiment as the previous paragraph, first end 212a of the each of plurality of bolts 212 is provided with a standard metric thread and second end 212b of the each of plurality of bolts 212 is provided with a self-forming or self-tapping thread such that when second end 212b is inserted into polymeric-material-based valve block 202, a confirming receiving slot is formed in polymeric-material-based valve block 202. It should be noted in the same embodiment, each solenoid valves 210 include at least two cylindrical receiving slots 208 for receiving plurality of bolts 212. Thus, second ends 212b of plurality of bolts 212 are inserted into valve block 202 whereas first ends 212a of plurality of bolts 212 are inserted via slots 208 of solenoid valves 210.

It is one of the most preferred embodiments of the present invention to provide the self-forming or self-tapping thread at second end 212b of each of plurality of bolts 212 and providing the standard metric thread at first end 212. In particular, insertion of metric thread in polymeric-material-based valve block 202 may not withstand the required load exerted due to solenoid valves 210 and still furthermore, any rework on the metric thread provided in polymeric-material-based valve block 202 may result in damage of the thread(s) in polymeric-material-based valve block 202. This could potentially lead to scrap polymeric-material-based valve block 202. Thus, second end 212b is advantageously or preferably is provided with the self-forming or self-tapping thread. It may be understood that a self-forming or self-tapping thread which naturally forms thread on material in which it is inserted, wherein the material in which the self-forming or self-tapping thread is softer than the screw or bolt which carries the self-tapping or self-forming thread.

Thus, first end 212a of the each of plurality of bolts 212 is assembled with a metric nut 212c to "firmly fix" the position of the corresponding solenoid valve from the plurality of solenoid valves. Providing the standard metric thread at second end 212b of each of plurality of bolts 212 enables further support for polymeric-material-based valve block 202 to hold solenoid valves 210.

As a consequence of having polymeric-material-based valve block 202 or as a further advantage, polymeric-material-based valve block 202 does not have any pre-formed thread(s) but only general bore(s) dedicated for receiving plurality of bolts 212, preferably before bolts 212 are assembled to valve block 202 because of e.g., the presence of self-tapping thread at second end 212b of the each of plurality of bolts 212. In simpler words, polymeric-material-based valve block 202 include the bore(s) with cylindrical and/or conical shape for receiving plurality of bolts 212. For instance, threads are formed within said bore(s) on performing a screwing motion i.e., a rotatory motion while assembling bolts 212 to polymeric-material-based valve block 202.ln accordance with one or more embodiments discussed above, second end 212b of the each of plurality of bolts 212 is additionally provided with a flange 212d for limiting the length up to which the each of plurality of bolts 212 can be inserted into polymeric-material-based valve block 202. In this advantageous implementation, flange 212d also optionally functions as an axial support to orient bolts 212 linearly with respect to polymeric-material-based valve block 202 apart from demarcating the limit to which second end 212b of the each of plurality of bolts 212 is provided with the self-tapping or self-forming thread.

In the same embodiment or a different embodiment as discussed above, plurality of pre-formed bores 216 are shown in Figure 2 in which plurality of bolts 212 are received. As shown in Figure 2, each of said plurality of pre-formed bores 216 may include optionally a stepped portion 216a for receiving flanges 212d, which are provided at second end 212b of plurality of bolts 212. Such stepped portion 216a may assist in fixing bolts 212 with respect to more firmly to polymeric-material-based valve block 202.

In accordance with an embodiment of the present invention, polymeric-material-based valve block 202 includes glass-fibre reinforced thermoplastic material or includes polyphthalamide. In accordance with the present invention, polymeric-material-based valve block 202 may include 50% glass-fibre reinforced engineering thermoplastic material based on a semi-crystalline, partially aromatic copolyamide. The choice of the material of glass-fibre reinforced thermoplastic material is particularly suitable for the injection molding process through which polymeric-material-based valve block 202 according to the present invention can be manufactured.

More importantly, glass-fibre reinforced thermoplastic material, compared to e.g., other polyphthalamides, illustrates required performance for use in assembly 200 for actuating the vehicle transmission or the gearbox according to the present invention at high temperatures providing parts which are stiffer, stronger and have better heat distortion stability and chemical resistance. Since, the vehicle transmission or the gearbox is in the vicinity of the internal combustion engine, the choice of material is particularly suited for the applications envisaged in the present invention. Furthermore, one of the salient advantages of using glass-fibre reinforced thermoplastic material for polymeric-material-based valve block 202 according to the present invention lies in its ability to be used directly in injection molding process without any pre-drying, as long as packing in which the glass-fibre reinforced thermoplastic material is delivered is not damaged before the start of the process of injective molding.

Still furthermore, depending the type of the actuator for the transmission or the gear box used, in accordance with one or more embodiments discussed above, the each of plurality of solenoid valves 210 are configured to open and/or close at least one fluid path within polymeric-material-based valve block 202, wherein the at least one fluid path is configured to operate with hydraulic (non-compressible) or pneumatic (compressible) fluid. For instance, pneumatic transmission actuator could be used in commercial vehicles whereas the hydraulic transmission actuator could be used in cars.

### List of reference signs (part of the description)

- A - A' -: longitudinal center axis
- 100 -: a conventional assembly for actuating a vehicle transmission or a gearbox
- 102 -: a valve block
- 104 -: a first side of valve block 102
- 106 -: a second side of valve block 102
- 108 -: receiving hole(s) that are part of solenoid valves 110 for receiving screws 112
- 110 -: solenoid valves
- 112 -: metal screws
- 114 -: a portion or region of metal screws 112 where threads are provided
- 116 -: holes at metal valve block 102
- 118 -: receiving slots for solenoid valves 110
- 200 -: Assembly for actuating a vehicle transmission or gearbox according to the present invention
- 202 -: polymeric-material-based valve block
- 204 -: a first side of polymeric-material-based valve block 202
- 206 -: a second side of polymeric-material-based valve block 202
- 208 -: cylindrical receiving slots present at solenoid valves 210
- 210 -: solenoid valves
- 212 -: plurality of bolts
- 212a -: first end of bolt 212
- 212b -: second end of bolt
- 212c -: metric nut
- 212d -: flange
- 216 -: plurality of bores present at polymeric-material-based valve block 202
- 216a -: a stepped portion at bore 216
- 218 -: receiving slots present at polymeric-material-based valve block 202 for receiving solenoid valves 210

## Claims

1. An assembly (200) for actuating a vehicle transmission or a gearbox, comprising
a plurality of solenoid valves (210), and
**characterized in that**, the assembly (200) further comprises
a polymeric-material-based valve block (202) for receiving the plurality of solenoid valves (210), wherein polymeric-material-based valve block (202) includes glass-fibre reinforced thermoplastic material,
**characterized in that**,
the polymeric-material-based valve block includes 50% glass-fibre reinforced engineering thermoplastic material based on a semi-crystalline, partially aromatic copolyamide.

2. The assembly (200) according to claim 1, wherein the polymeric-material-based valve block (202) includes at least one row of equidistantly positioned receiving slots (218), wherein the equidistantly positioned receiving slots (218) are for receiving the plurality of solenoid valves (210).

3. The assembly (200) according to claim 1 or 2, wherein the polymeric-material-based valve block (202) includes two rows of the equidistantly positioned receiving slots (218) positioned either symmetrically or asymmetrically on either side of a longitudinal center axis (A -A') or either of sides (204, 206) of the polymeric-material-based valve block (202).

4. The assembly (200) according to any one of the above claims, wherein the polymeric-material-based valve block (202) is manufactured by injection molding process.

5. The assembly (200) according to any one of the above claims, wherein the assembly (200) further comprises a plurality of bolts (212) and at least two of the plurality of bolts are used to attach each of the plurality of solenoid valves (210) to the polymeric-material-based valve block (202).

6. The assembly (200) according to claim 5, wherein the each of the plurality of bolts (212) are threaded on either of first and second ends (212a, 212b) of the each of the plurality of bolts (212).

7. The assembly (200) according to claim 6, wherein a first end (212a) of the each of the plurality of bolts (212) is provided with a standard metric thread and a second end (212b) of the each of the plurality of bolts (212) is provided with a self-forming or self-tapping thread such that when the second end (212b) is inserted into the polymeric-material-based valve block (202), a confirming receiving slot is formed in the polymeric-material-based valve block (202).

8. The assembly (200) according to any one of claims 5 to 7, wherein the polymeric-material-based valve block (202) does not have any pre-formed thread(s), but include plurality of bores (216) dedicated for receiving the plurality of bolts (212), wherein, preferably, the bore(s) is/are cylindrical or conical in shape and wherein, preferably, each of the plurality of bores (216) include a stepped portion (216a).

9. The assembly (200) according to claim 7, wherein the first end (212a) of the each of the plurality of bolts (212) is assembled with a metric nut (212c) to firmly fix the position of the corresponding solenoid valve in relation to the polymeric-material-based valve block (202).

10. The assembly (200) according to any one of claims 7 to 9, wherein the second end (212b) of the each of the plurality of bolts (212) is additionally provided with a flange (212d) for limiting the length up to which the each of the plurality of bolts (212) can be inserted into the polymeric-material-based valve block (202).

11. The assembly (200) according to any one of the above claims, wherein each of the plurality of solenoid valves (210) are configured to open and/or close at least one fluid path within the polymeric-material-based valve block (202), wherein the at least one fluid path is configured to operate with hydraulic (non-compressible) or pneumatic (compressible) fluid.

12. A method of manufacturing the assembly (200) according to any one of claims 1 to 11, wherein the method includes heating polymeric-material used to make polymeric-material-based valve block at a temperature range between 60 to 350 degrees Celsius in an injection molding machine.

13. A gearbox or transmission actuator comprising the assembly (200) according to any one of claims 1 to 11.

14. Use of the assembly according to any one of claims 1 to 11 in a vehicle transmission or gearbox of a commercial vehicle.

## Patentansprüche

1. Anordnung (200) zum Betätigen einer Fahrzeugkraftübertragungseinrichtung oder eines -Getriebes, umfassend
eine Vielzahl von Magnetventilen (210) und
**dadurch gekennzeichnet, dass** die Anordnung (200) ferner umfasst:
einen polymermaterialbasierten Ventilblock (202) zum Aufnehmen der Vielzahl von Magnetventilen (210), wobei der polymermaterialbasierte Ventilblock (202) glasfaserverstärktes thermoplastisches Material einschließt,
**dadurch gekennzeichnet, dass**
der polymermaterialbasierte Ventilblock zu 50 % glasfaserverstärktes technisches thermoplastisches Material, basierend auf einem halbkristallinen, teilweise aromatischen Copolyamid, umfasst.

2. Anordnung (200) nach Anspruch 1, wobei der polymermaterialbasierte Ventilblock (202) mindestens eine Reihe von äquidistant positionierten Aufnahmeschlitzen (218) einschließt, wobei die äquidistant positionierten Aufnahmeschlitze (218) zum Aufnehmen der Vielzahl von Magnetventilen (210) dienen.

3. Anordnung (200) nach Anspruch 1 oder 2, wobei der polymermaterialbasierte Ventilblock (202) zwei Reihen der äquidistant positionierten Aufnahmeschlitze (218) einschließt, die entweder symmetrisch oder asymmetrisch auf beiden Seiten einer Längsmittelachse (A -A') oder einer der Seiten (204, 206) des polymermaterialbasierten Ventilblocks (202) positioniert sind.

4. Anordnung (200) nach einem der vorstehenden Ansprüche, wobei der polymermaterialbasierte Ventilblock (202) durch Spritzgießen hergestellt ist.

5. Anordnung (200) nach einem der vorstehenden Ansprüche, wobei die Anordnung (200) ferner eine Vielzahl von Bolzen (212) umfasst, und mindestens zwei der Vielzahl von Bolzen verwendet werden, um jedes der Vielzahl von Magnetventilen (210) an dem polymermaterialbasierten Ventilblock (202) anzubringen.

6. Anordnung (200) nach Anspruch 5, wobei der jeder der Vielzahl von Bolzen (212) an einem des ersten und des zweiten Endes (212a, 212b) des jeweiligen der Vielzahl von Bolzen (212) mit einem Gewinde versehen ist.

7. Anordnung (200) nach Anspruch 6, wobei ein erstes Ende (212a) des jeden der Vielzahl von Bolzen (212) mit einem Standardmetrikgewinde versehen ist und ein zweites Ende (212b) des jeweiligen der Vielzahl von Bolzen (212) mit einem selbstbildenden oder selbstschneidenden Gewinde derart versehen ist, dass, wenn das zweite Ende (212b) in den polymermaterialbasierten Ventilblock (202) eingesetzt wird, ein aufnahmebestätigender Schlitz in dem polymermaterialbasierten Ventilblock (202) gebildet wird.

8. Anordnung (200) nach einem der Ansprüche 5 bis 7, wobei der polymermaterialbasierte Ventilblock (202) kein(e) vorgeformtes/vorgeformten Gewinde aufweist, sondern eine Vielzahl von Bohrungen (216) einschließt, die zum Aufnehmen der Vielzahl von Bolzen (212) vorgesehen sind, wobei vorzugsweise die Bohrung(en) zylindrisch oder konisch geformt ist/sind, und wobei vorzugsweise jede der Vielzahl von Bohrungen (216) einen abgestuften Abschnitt (216a) einschließt.

9. Anordnung (200) nach Anspruch 7, wobei das erste Ende (212a) des jeden der Vielzahl von Bolzen (212) mit einer metrischen Mutter (212c) zusammengebaut ist, um die Position des entsprechenden Magnetventils in Bezug auf den polymermaterialbasierten Ventilblock (202) fest zu fixieren.

10. Anordnung (200) nach einem der Ansprüche 7 bis 9, wobei das zweite Ende (212b) des jeweiligen der Vielzahl von Bolzen (212) zusätzlich mit einem Flansch (212d) versehen ist, zum Begrenzen der Länge, bis zu der jeder der Vielzahl von Bolzen (212) in den polymermaterialbasierten Ventilblock (202) eingesetzt werden kann.

11. Anordnung (200) nach einem der vorstehenden Ansprüche, wobei jedes der Vielzahl von Magnetventilen (210) konfiguriert ist, um mindestens einen Fluidweg innerhalb des polymermaterialbasierten Ventilblocks (202) zu öffnen und/oder zu schließen, wobei der mindestens eine Fluidweg konfiguriert ist, um mit einem hydraulischen (nicht komprimierbaren) oder pneumatischen (komprimierbaren) Fluid zu arbeiten.

12. Verfahren zum Herstellen der Anordnung (200) nach einem der Ansprüche 1 bis 11, wobei das Verfahren das Erhitzen von Polymermaterial einschließt, das verwendet wird, um einen polymermaterialbasierten Ventilblock bei einem Temperaturbereich zwischen 60 bis 350 Grad Celsius in einer Spritzgießmaschine herzustellen.

13. Getriebe- oder Kraftübertragungseinrichtungsaktuator, umfassend die Anordnung (200) nach einem der Ansprüche 1 bis 11.

14. Verwendung der Anordnung nach einem der Ansprüche 1 bis 11 in einer Fahrzeugkraftübertragungseinrichtung oder einem -Getriebe eines Nutzfahrzeugs.

## Revendications

1. Ensemble (200) permettant d'actionner une transmission de véhicule ou une boîte de vitesses, comprenant
une pluralité d'électrovannes (210), et
**caractérisé en ce que,** l'ensemble (200) comprend en outre
un bloc de vannes à base de matériau polymère (202) pour recevoir la pluralité d'électrovannes (210), dans lequel le bloc de vannes à base de matériau polymère (202) comporte un matériau thermoplastique renforcé de fibres de verre,
**caractérisé en ce que,**
le bloc de vannes à base de matériau polymère comporte un matériau thermoplastique technique renforcé à 50 % par des fibres de verre à base d'un copolyamide semi-cristallin partiellement aromatique.

2. Ensemble (200) selon la revendication 1, dans lequel le bloc de vannes à base de matériau polymère (202) comporte au moins une rangée de fentes de réception positionnées à équidistance (218), dans lequel les fentes de réception positionnées à équidistance (218) sont destinées à recevoir la pluralité d'électrovannes (210).

3. Ensemble (200) selon la revendication 1 ou 2, dans lequel le bloc de vannes à base de matériau polymère (202) comporte deux rangées des fentes de réception positionnées à équidistance (218) positionnées soit symétriquement soit asymétriquement de part et d'autre d'un axe central longitudinal (A-A') ou de l'un des côtés (204, 206) du bloc de vannes à base de matériau polymère (202).

4. Ensemble (200) selon l'une quelconque des revendications précédentes, dans lequel le bloc de vannes à base de matériau polymère (202) est fabriqué par moulage par injection.

5. Ensemble (200) selon l'une quelconque des revendications précédentes, dans lequel l'ensemble (200) comprend en outre une pluralité de boulons (212) et au moins deux de la pluralité de boulons sont utilisés pour fixer chacune de la pluralité d'électrovannes (210) au bloc de vannes à base de matériau polymère (202).

6. Ensemble (200) selon la revendication 5, dans lequel chacun de la pluralité de boulons (212) est fileté sur l'une quelconque de la première et de la seconde extrémité (212a, 212b) de chacun de la pluralité de boulons (212).

7. Ensemble (200) selon la revendication 6, dans lequel une première extrémité (212a) de chacun de la pluralité de boulons (212) est pourvue d'un filetage métrique standard et une seconde extrémité (212b) de chacun de la pluralité de boulons (212) est pourvue d'un filetage autoformant ou auto-taraudant de telle sorte que lorsque la seconde extrémité (212b) est insérée dans le bloc de vannes à base de matériau polymère (202), une fente de réception de confirmation est formée dans le bloc de vannes à base de matériau polymère (202).

8. Ensemble (200) selon l'une quelconque des revendications 5 à 7, dans lequel le bloc de vannes à base de matériau polymère (202) ne présente pas de filetages préformés, mais comporte une pluralité d'alésages (216) dédiés pour recevoir la pluralité de boulons (212), dans lequel, de préférence, le ou les alésages sont de forme cylindrique ou conique et dans lequel, de préférence, chacun de la pluralité d'alésages (216) comporte une partie étagée (216a).

9. Ensemble (200) selon la revendication 7, dans lequel la première extrémité (212a) de chacun de la pluralité de boulons (212) est assemblée avec un écrou métrique (212c) pour fixer fermement la position de l'électrovanne correspondante par rapport au bloc de vannes à base de matériau polymère (202).

10. Ensemble (200) selon l'une quelconque des revendications 7 à 9, dans lequel la seconde extrémité (212b) de chacun de la pluralité de boulons (212) est en outre pourvue d'une bride (212d) pour limiter la longueur jusqu'à laquelle chacun de la pluralité de boulons (212) peut être inséré dans le bloc de vannes à base de matériau polymère (202).

11. Ensemble (200) selon l'une quelconque des revendications précédentes, dans lequel chacune de la pluralité d'électrovannes (210) est configurée pour ouvrir et/ou fermer au moins un trajet de fluide à l'intérieur du bloc de vannes à base de matériau polymère (202), dans lequel l'au moins un trajet de fluide est configuré pour fonctionner avec un fluide hydraulique (non compressible) ou pneumatique (compressible).

12. Procédé de fabrication de l'ensemble (200) selon l'une quelconque des revendications 1 à 11, dans lequel le procédé comporte le chauffage d'un matériau polymère utilisé pour fabriquer un bloc de vannes à base de matériau polymère à une plage de température comprise entre 60 et 350 degrés Celsius dans une machine de moulage par injection.

13. Actionneur de boîte de vitesses ou de transmission comprenant l'ensemble (200) selon l'une quelconque des revendications 1 à 11.

14. Utilisation de l'ensemble selon l'une quelconque des revendications 1 à 11 dans une transmission ou boîte de vitesses de véhicule d'un véhicule utilitaire.
